# EUROPÄISCHE PATENTANMELDUNG

(11) **EP 2 769 899 A2**
(43) Veröffentlichungstag der Anmeldung: **27.08.2014**
(21) Anmeldenummer: 14000302.1
(22) Anmeldetag: 28.01.2014
(51) Int. Cl.: B62B 5/02

(54) **Transportgerät in Form eines Transportwagens**

(30) Priorität: 22.02.2013 DE 102013003432
(71) Anmelder: ThyssenKrupp Marine Systems GmbH, 24143 Kiel (DE)
(72) Erfinder: Wolfram, Determann, D-22851 Norderstedt (DE); Popall, Christian, D-22303 Hamburg (DE)
(74) Vertreter: Hansmann, Dierk

(57) **Zusammenfassung**

Bei einem Transportwagen mit beanstandeten Radsätzen (3) ist vorgesehen, dass über ein Getriebe die Radsätze (3) höhenverstellbar angeordnet sind, um bei Überwindung von Hindernissen die Aufnahmefläche konstant zur Bodenfläche verbleibt. Hierzu ist vorgesehen, dass die Radsätze jeweils durch mindestens drei sternförmig über Halterarme angeordnete einzelne Räder (7) gebildet sind und zwischen den Rädern (7) ein Aufnahmeraum für das zu überwindende Hindernis gebildet ist und das eine zentrale Welle (5) der Haltearme (6) ein Antriebszahnrad (8) des Getriebes trägt, das mit einem Abtriebszahnrad (9) zur Untersetzung im Eingriff steht und über eine Welle durch eine gemeinsame Führungslasche beide Wellen der Antriebs- und Abtriebszahnräder fest zugeordnet sind, wobei die Führungslasche (11) in einer Vertikalführung eines Getriebegehäuses geführt ist und die Welle des Abtriebszahnrades zur Untersetzung mit einer Kurbelwange (15) zur Verdrehung fest verbunden ist sowie die Kurbelwange die über eine angeordnete Pleulstange (16) an dem Getriebegehäuse angelenkt ist.

## Beschreibung

Die Erfindung betrifft ein Transportgerät gemäß dem Oberbegriff von Anspruch 1.

Es ist bekannt, Transportwagen in unterschiedlicher Weise auszubilden, um Hindernisse, wie sie insbesondere bei Schiffen in Form von Süllen üblich sind, zu überwinden. Dabei ist es oftmals erforderlich, die auf der Aufnahmefläche angeordneten Güter festzusetzen bzw. mit Hilfsmitteln umzusetzen. Deshalb besteht die Forderung, die Aufnahme auch bei einem Hindernis in einer horizontalen Lage zu behalten. Diese Problematik ist besonders bei Marineschiffen von wesentlicher Bedeutung, um auch eine schnelle und einfache Materialzuführung zu ermöglichen.

Nach der US 2012/ 0 175 172 A1 ist bereits ein Transportwagen bekannt, wobei höhenverstellbare und verschiebbare Räderwagen angeordnet sind, die jeweils mit elektrischer Energie und Servomotoren über einen Pantographen in der Höhe einstellbar sind. Diese Anordnung ist somit relativ aufwendig.

Die Aufgabe der Erfindung ist es, auf einfache Weise mit einem Transportwagen Hindernisse, insbesondere schiffsübliche Süllhöhen und -breiten, unter Beibehaltung einer horizontalen Aufnahmefläche zu überwinden.

Diese Aufgabe wird durch einen Gegenstand gemäß Anspruch 1 gelöst.

Hierdurch ist es möglich, auch schwere Lasten mit dem Transportwagen über Hindernisse unter Beibehaltung einer Horizontallage der Aufnahmefläche zu verschieben.

Eine vorteilhafte Lösung wird dadurch geschaffen, dass vier sternförmig über Haltearme angeordnete einzelne Räder angeordnet sind.

Eine optimale Anpassung an die vorliegenden Verhältnisse wird dadurch gekennzeichnet, dass das Untersetzungsverhältnis der Zahnräder für An- und Abtrieb entsprechend der Anzahl der über Haltearme angeordneten Räder bemessen ist.

Ferner wird vorgeschlagen, dass parallele Radsätze über ein Getriebe gemeinsam verstellbar sind.

Um auch schwere Lasten zu handhaben, wird vorgeschlagen, dass die Getriebeeinstellung zur Verstellung der Radsätze über eine elektro-mechanische Einrichtung unterstützbar ist.

In der Zeichnung ist ein Ausführungsbeispiel der Erfindung schematisch dargestellt, wobei jeder Radsatz vier sternförmig angeordnete Räder aufweist. Es zeigen:

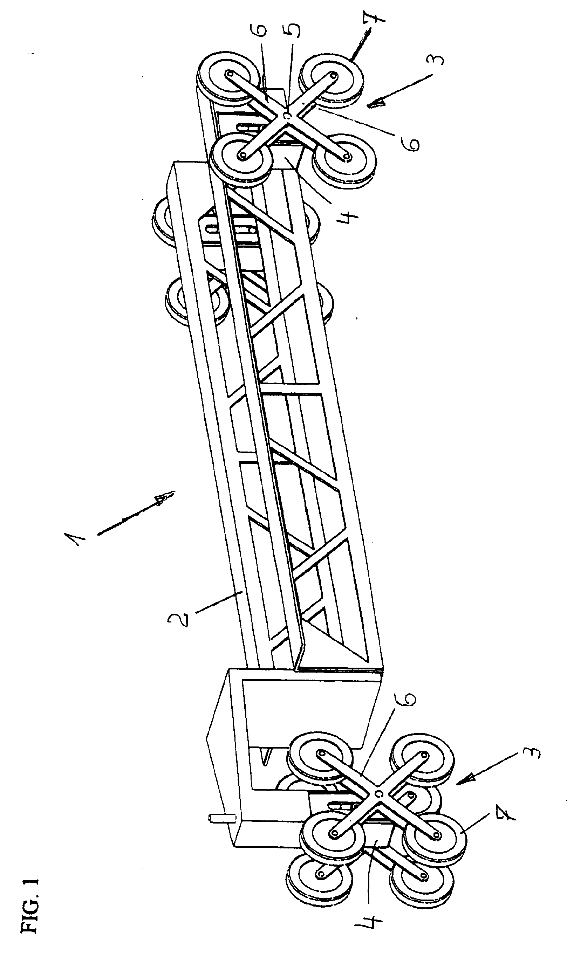

- Fig. 1: eine perspektivische Darstellung eines Transportwagens,

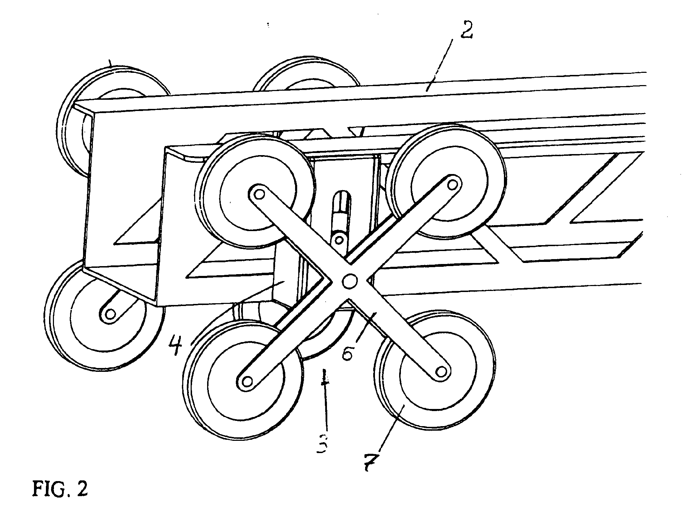

- Fig. 2: eine vergrößerte Teildarstellung der hinteren Radsätze des Transportwagens nach Fig. 1 mit zugeordneter Getriebeeinheit,

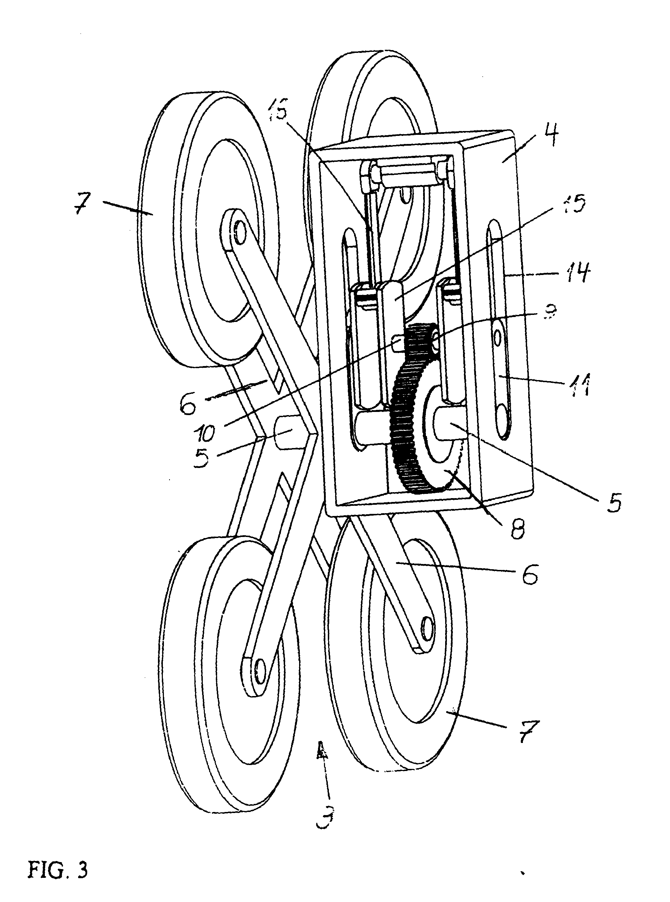

- Fig. 3: eine Getriebeeinheit mit zugeordnetem Radsatz,

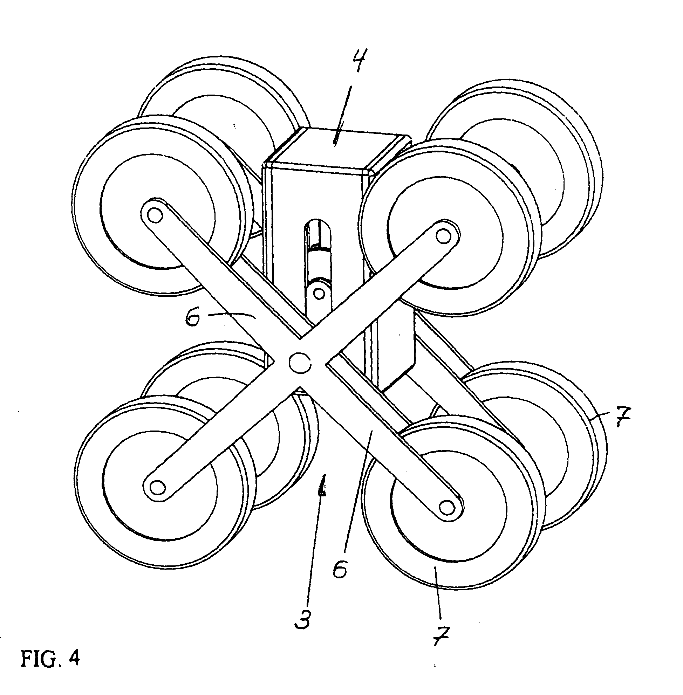

- Fig. 4: einen Radsatz mit Getriebeeinheit,
- Fig 5-9: einen prinzipiellen Funktionsablauf eines Radsatzes mit zugeordneter Getriebestellung beim Überwinden eines Hindernisses.

Bei der dargestellten Anordnung weist ein Transportwagen 1 mit einer Aufnahme 2 im hinteren und vorderen Bereich Radsätze 3 auf. Die Radsätze 3 sind über ein Getriebegehäuse 4 mit der Aufnahme 2 des Transportwagens 1 verbunden.

Die Radsätze 3 sind in dieser Ausführung durch vier sternförmig über Haltearme 6 angeordnete Räder 7 gebildet. Selbstverständlich kann auch eine andere Anzahl von Haltearmen 6 gewählt werden.

Im Getriebegehäuse 4 ist eine zentrale Welle 5 mit einem Getriebe verbunden, das aus einem Antriebszahnrad 8 besteht und mit einem kleineren Antriebszahnrad 9 als Untersetzung im Eingriff steht. Das Abtriebszahnrad 9 ist über eine Welle 10 gelagert. Beide Wellen, 5, 10 sind über eine gemeinsame Führungslasche 11 im Abstand fest zugeordnet, wobei die Führungslasche 11 in einem vertikalen Führungsausschnitt 14 des Getriebegehäuses 4 verschiebbar geführt ist.

Weiterhin ist die Welle 10 des Abtriebzahnrades 9 mit einer Kurbelwange 15 fest verbunden, die an einem Außenbereich mit einer Pleulstange 16 gekoppelt und wiederum am oberen Getriebegehäuse angelenkt, um eine kontrollierte Drehbewegung des Abtriebzahnrades 9 zu ermöglichen.

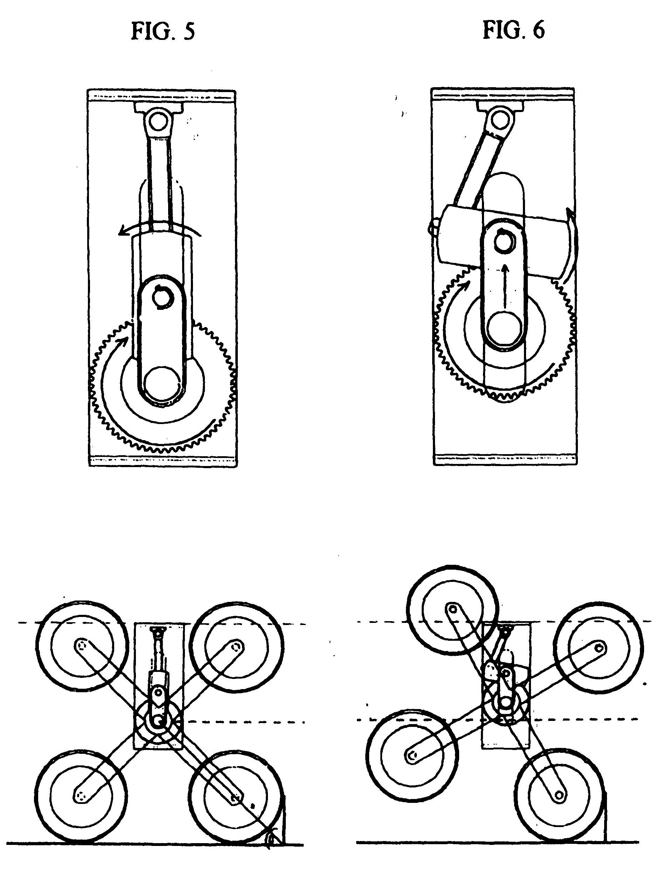

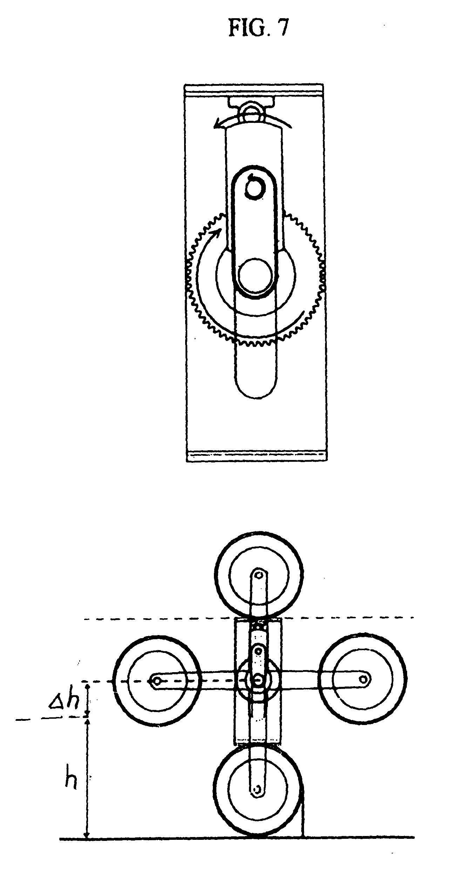

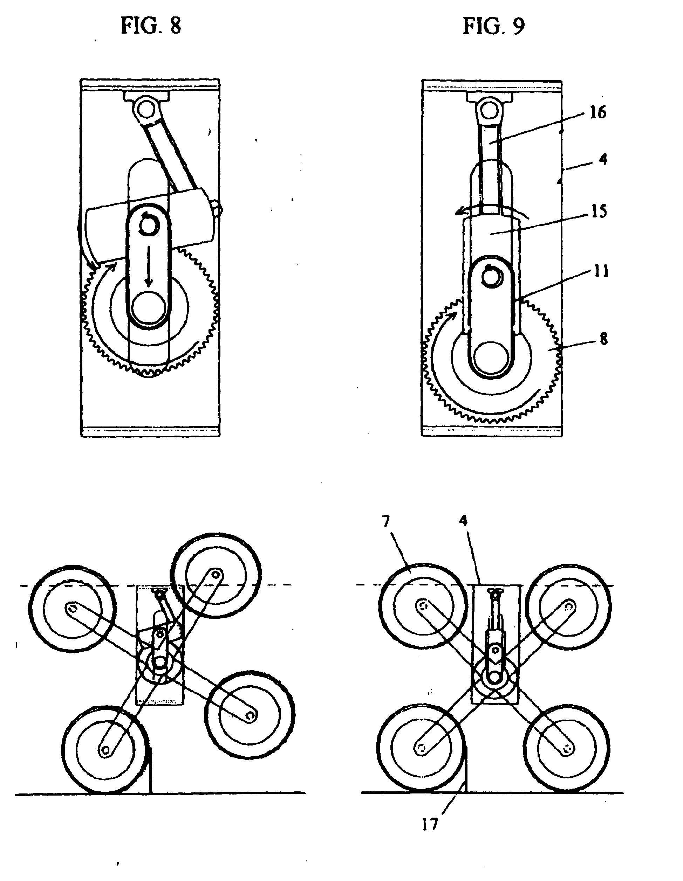

Der Ablauf bei Überwindung eines Hindernisses 17 als Süll gemäß Fig. 5 bis 9 erfolgt in folgenden Schritten:
In Ausgangsstellung steht das Getriebe 8, 9 als Ausgleichseinheit im Getriebegehäuse 4 mit dem Radsatz 3 vor dem Süll 17 auf zwei Rädern 7.

Anschließend wird das Rad 7 gegen die Süll 17 gedrückt. Dadurch hebt sich das hintere der beiden am Boden stehenden Räder 7 ab und der Radsatz 3 mit den vier Rädern 7 rotiert im Uhrzeigersinn soweit bis der Radsatz 3 hochkant nur noch auf einem Rad 7 steht. Dabei versucht das Getriebegehäuse 4 nach oben zu wandern. Um dieses zu verhindern, gleicht das Getriebe die Höhendifferenz aus.

Dies geschieht dadurch, dass über die sich mitdrehende Welle 5 und dem darauf befestigten Antriebszahnrad 8 im Verhältnis i=0,25 zum Abtriebszahnrad 9 auf der Welle 10 die Kurbelwange 15 um 180° rotieren. Wobei die beiden Wellen 5, 10 über die Führungslasche 11 in Position gehalten wird. Die Kurbelwange 15, verbunden mit der Pleuelstange 16 sorgt letztendlich dafür, dass die Führungslasche 11 im Verhältnis zum Getriebegehäuse 4 durch die rotatorische Bewegung des Radsatzes in eine translatorische Aufwärtsbewegung versetzt wird und so die maximale Höhendifferenz ausgleicht.

Anschließend wird der Radsatz 3 durch die weiterhin anstehende horizontale Kraft des Transportwagens 1 weiter im Uhrzeigersinn gedreht bis wieder zwei Räder 7 durch mindestens das gesamte Eigengewicht auf dem Boden stehen. Durch dieses Kippen, bis zum Aufsetzen des zweiten Rades 7, rotiert das Antriebszahnrad 8 weiterhin und treibt so über das Antriebszahnrad 9 auf der Welle 10 die Kurbelwangen/Pleuelstangenkombination 15, 16 an. Diese Bewegung versetzt die Führungslasche 11 wiederum in eine translatorische Abwärtsbewegung und gleicht so erneut die Höhendifferenz aus.

Aufgrund der Führung durch die Führungslasche im Getriebegehäuse 4 und dem Eigengewicht der Vorrichtung, ist ein ungewolltes Aufschlagen des vorderen Rades 7 ausgeschlossen. Denn durch das Rotieren des Radsatzes 3 und damit das Minimieren der Höhe der Welle 5 wird zwangsläufig das Getriebegehäuse 4 nach oben gedrückt und wirkt so der Gewichtskraft entgegen. Der positive Effekt entsteht dadurch, dass die gesamte Mechanik als passive Regelung des Höhenausgleichs, in Bezug auf die Stellung des Radsatzes zum Getriebegehäuse 4, ausgeführt ist.

## Patentansprüche

1. Transportgerät in Form eines Transportwagens mit beabstandeten Radsätzen und einer konstant zur Bodenfläche angeordneten Aufnahme für Güter durch die verstellbaren Radsätze zur Überwindung von Hindernissen, wobei die Radsätze über ein Getriebe mit der Aufnahme höhenverstellbar gekoppelt sind, **dadurch gekennzeichnet, dass** die Radsätze (3) jeweils durch mindestens drei sternförmig über Haltearme (6) angeordnete einzelne Räder (7) gebildet sind und zwischen den Rädern (7) ein Aufnahmeraum für das zu überwindende Hindernis (17) gebildet ist und dass eine zentrale Welle (5) der Haltearme (6) ein Antriebszahnrad (8) des Getriebes trägt, das mit einem Abtriebszahnrad (9) zur Untersetzung im Eingriff steht und über eine Welle (10) durch eine gemeinsame Führungslasche (11) beide Wellen (5, 10) der Antriebs- und Abtriebszahnräder (8, 9) fest zugeordnet sind, wobei die Führungslasche (11) in einer Vertikalführung eines Getriebegehäuses(4) geführt ist und die Welle (10) des Abtriebszahnrades (9) zur Untersetzung mit einer Kurbelwange (15) zur Verdrehung fest verbunden ist wobei die Kurbelwange (15) über eine angeordnete Pleuelstange (16) an dem Getriebegehäuse (4) angelenkt ist.

2. Transportgerät nach Anspruch 1, **dadurch gekennzeichnet, dass** vier sternförmig über Haltearme (6) angeordnete einzelne Räder (7) angeordnet sind.

3. Transportgerät nach Anspruch 1 oder 2, **dadurch gekennzeichnet, dass** das Untersetzungsverhältnis der Zahnräder (8, 9) für An- und Abtrieb entsprechend der Anzahl der über Haltearme (6) angeordneten Räder (7) bemessen ist.

4. Transportgerät nach einem der Ansprüche 1 bis 3, **dadurch gekennzeichnet, dass** parallele Radsätze (3) über ein Getriebe (8, 9) gemeinsam verstellbar sind.

5. Transportgerät nach einem der Ansprüche 1 bis 4, **dadurch gekennzeichnet, dass** die Getriebeeinstellung zur Verstellung der Radsätze (3) über eine elektro-mechanische Einrichtung unterstützbar ist.
